# EUROPEAN PATENT APPLICATION

(11) **EP 4 491 814 A1**
(43) Date of publication of application: **15.01.2025**
(21) Application number: 24188220.8
(22) Date of filing: 12.07.2024
(51) Int. Cl.: E03F 7/06, A01M 29/30

(54) **AN APPARATUS FOR PREVENTING THE MOVEMENT OF RATS IN A PIPE**

(30) Priority: 12.07.2023 IE S20230270
(71) Applicant: Ratstop Limited, D15 P9CV Dublin 15 (IE)
(72) Inventor: ANDRONIC, GHEORGHE, Dublin, D15 P9CV (IE); AXINTE, COSTEL LAURENTIU, Dublin, D15 P9CV (IE); BARBUNTOIU, ALEXANDRU CRISTIAN, County Kildare, W23 HH56 (IE)
(74) Representative: MacLachlan & Donaldson

(57) **Abstract**

An apparatus (1) for preventing the movement of rats in a pipe, comprises a barrier (2) having a curved frame (10) for engaging with the inner surface of a pipe. The frame (10) comprises a top portion (10a) and two mutually opposing side portions (10b) and (10c) extending from the top portion (10a); a flap (12) connected to the frame (10) via a pivot (14), wherein, in use, the flap (12) hangs substantially vertically, even when the pipe is at an inclined angle to the horizontal, and the flap (12) is rotatable about the pivot in a downstream direction to allow the passage of waste past the apparatus. The flap (12) includes a stop means for preventing rotation of the flap (12), beyond the substantially vertical position, in an upstream direction, to prevent rats from moving past the apparatus in an upstream direction.

## Description

The present invention relates to the technical field of rodent control, particularly in sewage or pipe systems.

Vermin such as rats, in particular sewer rats, commonly enter buildings including homes via the underground network of pipes that form the sewer system. Rats can squeeze through tiny gaps or openings in drainage pipes or via the toilet for example to enter buildings.

Numerous solutions exist for preventing rats from exploiting pipes to enter a building. One such solution is to install a barrier, such as that disclosed in GB 2491633, which comprises a moveable flap that blocks rats from moving upstream towards the building but allows the waste to flow out from the building. While these barriers may prevent rodent access to some degree, they are not without limitations. These barriers are not suitable for use in inclined pipes because the flap of the barrier hangs open, allowing rats to squeeze beneath the flap, thereby bypassing the barrier. In addition, these barriers are difficult and cumbersome to install, often requiring a variety of tools.

The present invention seeks to provide a solution to the above-mentioned problems, to provide a device that effectively prevents the movement of rats in inclined pipes and to improve the ease of installation of such devices.

According to a first aspect of the invention, there is provided an apparatus for preventing the movement of rats in a pipe, the apparatus comprising a barrier having:
- a curved frame for engaging with the inner surface of a pipe, wherein the frame comprises a top portion and two mutually opposing side portions extending from the top portion
- a flap connected to the frame via a pivot, wherein, in use, the flap hangs substantially vertically and is rotatable about the pivot in a downstream direction to allow the passage of waste past the apparatus
- a stop means for preventing rotation of the flap, beyond the substantially vertical position, in an upstream direction, to prevent rats from moving past the apparatus in an upstream direction.

Advantageously, the apparatus prevents rats or other vermin from bypassing the barrier and moving further upstream towards a building.

Preferably, the barrier is suitable to prevent the movement of rats past the barrier in an upstream direction in inclined pipes.

Preferably, in use, the flap of the barrier hangs vertically or substantially vertically even when the barrier is arranged at an incline relative to the horizontal and/or when pipe is inclined relative to the horizontal.

Preferably, the barrier is suitable for use in pipes that are inclined at an angle up to or beyond 10°, ideally beyond 20° and most preferably beyond 30°.

Preferably, in use, the flap of the barrier hangs vertically or substantially vertically even when the barrier is arranged at an incline up to beyond 10°, ideally beyond 20° and most preferably beyond 30° relative to the horizontal and/or when pipe is inclined at an angle up to or beyond 10°, ideally beyond 20° and most preferably beyond 30° relative to the horizontal.

Preferably, the barrier is suitable for use in pipes inclined at an angle up to 40°.

Preferably, in use, the flap of the barrier hangs vertically or substantially vertically even when the barrier is arranged at an incline up to 40° relative to the horizontal and/or when pipe is inclined at an angle up to 40° relative to the horizontal.

Preferably, the length of the flap is between approximately 80% to 90% of the width of the frame.

Preferably, the length of the flap is between approximately 80% to 90% of the length of the barrier. Most preferably, the length of the flap is between 85% to 90% of the length of the barrier. Ideally, the length of the flap is approximately 87% the length of the barrier. Alternatively, the length of the flap is 90% or more of the length of the barrier.

By length of the barrier, we mean from the top portion of the frame to the lowermost edge of the flap.

By length of the flap, we mean from the uppermost edge of the flap to the lowermost edge of the flap.

In one embodiment where the barrier is for use in a 4-inch pipe, the length of the flap is between approximately 80 to 90 mm. Preferably, between approximately 85 to 90 mm. Most preferably, approximately 87 mm.

Advantageously, this enables the barrier to operate in pipes inclined at an angle up to 10°.

In another embodiment where the barrier is for use in a 4-inch pipe, the length of the flap is between 90 to 100 mm. Preferably, between approximately 95 to 100 mm. Most preferably, approximately 97 mm.

Advantageously, this enables the barrier to operate in pipes inclined at an angle up to 40°.

In one embodiment where the barrier is for use in a 4-inch pipe, the length of the barrier is between 90 to 100 mm. Preferably, between approximately 95 to 100 mm. Most preferably, approximately 97 mm.

Advantageously, this enables the barrier to operate in pipes inclined at an angle up to 10°.

In another embodiment where the barrier is for use in a 4-inch pipe, the length of the barrier is between 100 to 110 mm. Preferably, between approximately 105 to 110 mm. Most preferably, approximately 107 mm.

Advantageously, this enables the barrier to operate in pipes inclined at an angle up to 40°.

Thereby, in use, the apparatus effectively blocks travel of rats in an upstream direction in inclined pipes.

Preferably, the flap is shaped to prevent rotation of the flap, beyond the substantially vertical position, in an upstream direction.

Ideally, the flap is shaped to abut against the side portions of the curved frame to prevent rotation of the flap, beyond the substantially vertical position, in an upstream direction.

Preferably, the flap is curved. Most preferably, the flap is convex shaped.

Advantageously, this enables the flap to sit flush with the frame when the flap is open to allow the maximum amount of waste to the pass the barrier in the downstream direction.

By open, we mean that the flap is rotated in a downstream direction.

Preferably, the barrier comprises a plurality of stop means for preventing over-insertion of the barrier into the pipe during installation and/or movement of the barrier within the pipe, after installation.

Advantageously, this prevents movement of the barrier, in a downstream direction, due to force being applied from waste or water. Thereby, this prevents the barrier from becoming dislodged from pipe or moved so far down the pipe that rats are able to bypass the barrier.

Preferably, the barrier is configured to be installed at either end of a pipe.

Preferably, when installed at the beginning of a pipe, this is referred to as a downstream installation because the barrier is inserted into the pipe in a downstream direction. Ideally, when installed at the end of a pipe, this is referred to as an upstream installation because the barrier is inserted into the pipe in an upstream direction.

Preferably, the frame comprises a main surface that extends around the top portion and both side portions.

Preferably, the barrier comprises a pipe end stop means for abutting against a pipe end, in use.

Preferably, the barrier comprises a pipe end stop means located on a leading end of the barrier and/or a pipe end stop means located on a trailing end of the barrier.

Preferably, the pipe end stop means is located on the top portion of the frame.

Alternatively, or additionally, the pipe end top means is located on one or both side portions of the frame.

Preferably, the barrier comprises an angled pipe end stop means for abutting against the end of a pipe that is cut at an angle.

Preferably, the angled pipe end stop means extends from the main surface of the frame on one or both side portions.

Advantageously, this enables the angled pipe end stop means to abut against a side portion of a pipe end that is cut to an angle.

Ideally, the angled pipe end stop means extends outwardly from the main surface of the frame on one or both side portions, at an angle, preferably extending perpendicular from the main surface of the frame, to abut against a portion of the pipe end, in use.

Preferably, the barrier comprises a pipe wall stop means for abutting against the internal surface of a pipe to prevent movement of the barrier within the pipe.

Preferably, the pipe wall stop means comprises a pointed tip for abutting against the internal surface of a pipe, in use, to prevent movement of the barrier within the pipe in the direction of the pointed tip.

Preferably, the pointed tip of the pipe wall stop means points towards the leading end of the barrier and/or in a downstream direction, in use.

Advantageously, the pointed tip opposes the movement of the barrier in a downstream direction, in use. Thereby, this prevents the barrier from being dislodged or forced in a downstream direction by waste and/or water travelling past the barrier.

Ideally, the pipe wall stop means is V-shaped.

Preferably, the plurality of stop means, pipe end stop means, angled pipe end stop means and/or pipe wall stop protrudes outwardly from the main surface of the frame at an angle to abut against a portion of the pipe, in use.

Preferably, the barrier comprises one or more wire-securing means around which a removal wire can be looped or tied for securing a removal wire to the barrier without the use of mechanical fixings.

Advantageously, this reduces the amount of equipment and tools required to attach the removal wire. This is in comparison to prior art devices wherein the removal wire is secured to the device via a screw or other mechanical fixing, thereby requiring the mechanical fixing and a tool such as a screwdriver to attach the wire. Further advantageously, this increases the ease of securing the wire and/or reduces the time required to secure the wire compared to prior art systems which involve mechanical fixings and/or other equipment or tools.

Preferably, the wire securing means being shaped to prevent disengagement of the wire.

Preferably, wire securing means comprises a first member around which a wire can be lopped or tied and a second member for preventing disengagement of the wire from the wire securing means.

Ideally, the first member extends from the main surface of the frame and the second member comprises two branches extending from the first member in opposite directions.

Advantageously, the second member prevents the wire from slipping off the first member. In particular, the second member abuts against the loop or tied portion of the wire, in use, to prevent slippage of the wire off the first member.

Preferably, the barrier comprises a first wire securing means located on the leading end of the barrier and a second wire securing means located on the trailing end of the barrier.

Advantageously, the wire can be effectively secured regardless of whether the installation of the barrier is upstream or downstream.

Preferably, in use, the wire by passes the wire securing means that will be located on the end of the barrier closest to the pipe end, when the barrier is installed, and extends beneath the top portion of the barrier to the wire securing means located on the other end of the pipe and is secured around that wire securing means.

Preferably, the wire securing means extends from the main surface of the frame into an aperture on the frame through which the removal wire can be received.

Preferably, in use, the wire is threaded through a first aperture located on the end of the barrier that will be closest to the pipe end, when the barrier is installed, and extends beneath the top portion of the barrier and through a second aperture located on the other end of the barrier and is looped or tied around the wire securing means extending into the second aperture.

Preferably, the wire securing means is T-shaped.

Ideally, in one embodiment, the wire securing means is operable as the pipe end stop means and vice versa.

Preferably, the frame of the barrier comprises one or more protruding portions forming one or more of the plurality of stop means, pipe end stop means, angled pipe end stop means and/or pipe wall stop means.

Preferably, the one or more protruding portions extend away from the main surface of the frame, at an angle, in use.

Advantageously, this enables the protruding portions to abut against a portion of the pipe, in use, to prevent movement of the barrier.

Preferably, the one or more protruding portions extend coplanar to the main surface of the frame and are bendable to extend away from the main frame at an angle to form one or more of the stop means.

Advantageously, this enables the appropriate stop means to be deployed when required. Thereby, this prevents the stop means from hindering the installation of the barrier. Further advantageously, this reduces the size and bulkiness of the barrier for storage and transportation. This is in comparison to devices having the stop means deployed or extending away from the main surface of the frame at an angle, at all times.

Preferably, one or more of the protruding portions are, alternatively or additionally, suitable for forming the wire securing means.

Advantageously, one or more of the protruding portions are multifunctional. Thereby, this reduces the complexity of the barrier. This is in comparison to devices having separate parts for each function.

Preferably, the flap of the barrier comprises one or more openings for allowing the passage of air or a draught to prevent the air or draught from forcing the flap to open.

Advantageously, this prevents the force of a draught from opening the flap/causing the flap to rotate in a downstream direction which may enable rats to bypass the barrier and move further upstream.

Preferably, the barrier is formed from stainless steel, most preferably 1.2 mm stainless steel.

Ideally, the barrier maintains secure engagement with a pipe via friction fit or via the natural spring action of the frame causing it to compress against the internal wall of the pipe.

Preferably, the apparatus comprises an installation means for installing the barrier in a pipe, the installation means having a clamping means for clamping onto the barrier.

Preferably, the clamping means comprises a shaft engaging portion for engaging with an elongate shaft, in use.

Preferably, the clamping means comprises a clamping portion.

Ideally, the installation means comprises an elongate shaft for connecting to the clamping means.

Advantageously, the elongate shaft enables the installation means to stretch down manholes to install the barrier.

Preferably, the clamping means comprises two mutually opposing clamping jaws, each comprising a clamping surface for sandwiching a portion of the barrier therebetween.

Preferably, the clamping surfaces are located on the clamping portion.

Preferably, one or both of the clamping surfaces comprise a slope to enable the barrier to extend at a slope relative to the longitudinal axis of the shaft and/or relative to the shaft engaging portion of the clamping means when the barrier is clamped between the clamping surfaces.

Advantageously, this reduces the depth of the apparatus when the barrier is clamped. Thereby, in use, the apparatus occupies minimal space in the manhole or drain during installation. Thereby, this improves the ease of installation of the barrier. This is in comparison to apparatuses wherein the barrier is held perpendicular, or substantially perpendicular, to the shaft of an installation means which causes parts of the apparatus to hit against the edges or surfaces of a manhole.

Preferably, the angle of the slope is approximately 5 °.

Preferably, the clamping faces are curved, in particular convex, to sit flush with the curved frame of the barrier, in use.

Advantageously, this maximises engagement of the clamping surfaces with the barrier.

Preferably, one of the clamping jaws comprises one or more fixing means, in particular one or more screws, configurable to engage with one or more apertures provided on the frame of the barrier and with one or more apertures provided on the other of the clamping jaws, to secure the barrier to the clamping means, in use.

Advantageously, in use, the one or more fixing means extend from one of the clamping jaws, through the barrier and into the other of the clamping jaws.

Preferably, the clamping force of the jaws can be increased or decreased i.e., tightened or loosened.

Advantageously, this enables disengagement of the installation means from the barrier once the barrier has been installed in the pipe.

Preferably, the installation means comprises a threaded fastener extending from the shaft and through an aperture on one or both of the clamping jaws to enable tightening or loosening of the clamping force, in use.

Preferably, the threaded fastener engages with a nut fixed on or about one or both of the clamping jaws.

Preferably, twisting of the elongate shaft causes twisting of the threaded nut relative to one or both of the clamping jaws. Thereby, this causes one or both of the clamping jaws to move towards or away from the other.

Preferably, the shaft of the installation means comprises two members telescopically arranged relative to one another to enable adjustment of the length of the shaft.

Advantageously, the apparatus can be used for a variety of pipes located at different depths. Further advantageously, this enables the length of the shaft portion to be minimised for transport and storage.

According to a second aspect of the invention there is provided an installation means for installing a rat barrier in a pipe, the installation means comprises a clamping means for clamping onto a barrier and a shaft engaging portion for engaging with a shaft to enable handling of the installation means, in use.

Preferably, the installation means comprises two clamping surfaces for clamping a barrier therebetween, the clamping surfaces extending from the shaft engaging portion at a slope to enable the barrier to extend at a slope relative to the shaft engaging portion and/or the longitudinal axis of the shaft when the barrier is clamped between the clamping surfaces.

Advantageously, this reduces the depth of the apparatus when the barrier is clamped. Thereby, in use, the apparatus occupies minimal space in the manhole or drain during installation. Thereby, this improves the ease of installation of the barrier. This is in comparison to apparatuses wherein the barrier is held perpendicular, or substantially perpendicular, to the shaft of an installation means which causes parts of the apparatus to hit against the edges or surfaces of a manhole.

Preferably, the installation means comprises one or more features of the installation means according to the first aspect of the invention.

The invention will be more clearly understood from the following description of some embodiments thereof, given by way of example only, with reference to the accompanying drawings, in which:
Figure 1 shows a barrier of the apparatus according to the invention, wherein the flap is closed;
Figure 1a shows a barrier of the apparatus according to the invention, wherein the flap is open;
Figure 2 shows a perspective view of the flap of the barrier;
Figures 2a shows a top view of the flap of figure 2;
Figures 2b and 2c show a pivot, in particular, a hinge screw for connecting the flap to the frame of the barrier;
Figure 3 is a front view of a flap according to one embodiment of the invention and figure 3a is a side view of the flap of figure 3;
Figure 4 is a front view of a flap according to another embodiment of the invention and figure 4a is a side view of the flap of figure 4;

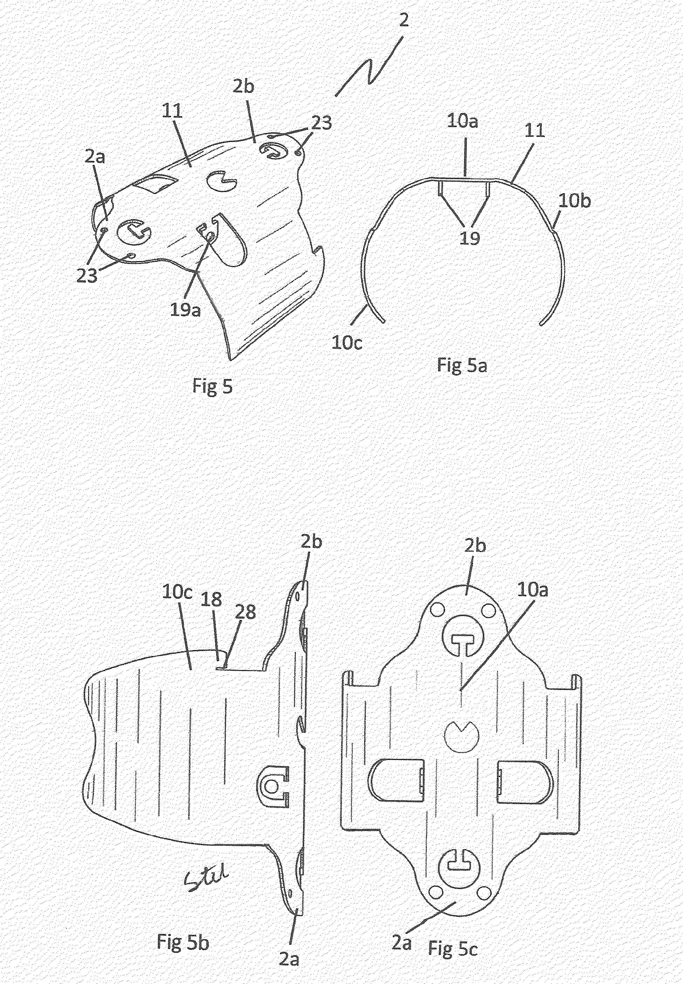

Figures 5 is a perspective view of a frame of the barrier according to an aspect of the invention, figure 5a is a front view of the frame of figure 5, 5b is side view of the frame of figure 5 and 5c is a top view of the frame of figure 5;

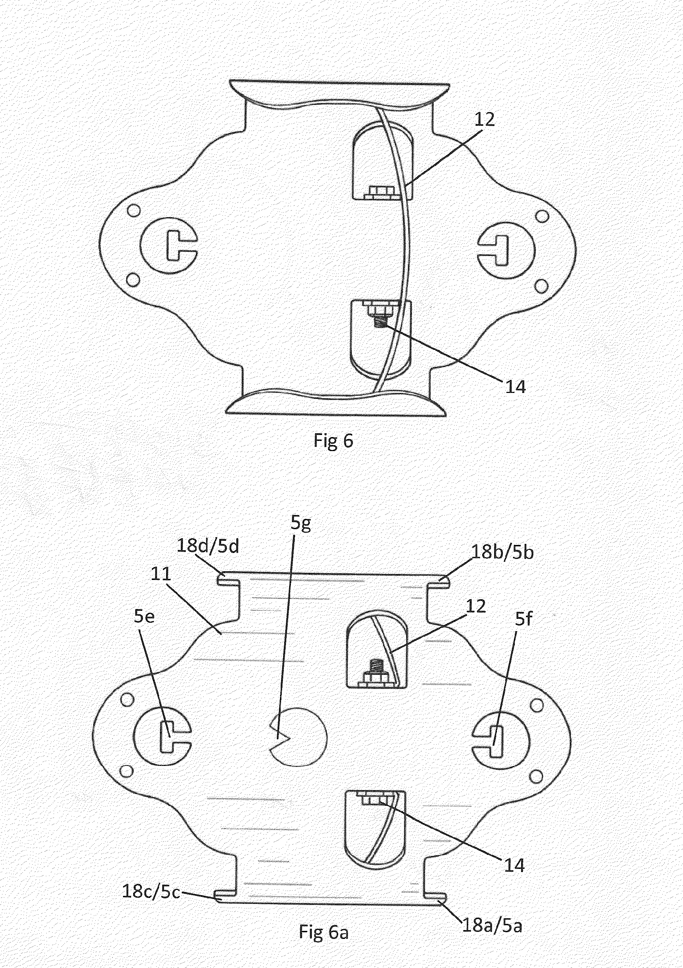

Figure 6 shows a bottom view of the barrier according to an aspect of the invention and figure 6a shows a top view of the barrier according to an aspect of the invention;
Figures 7 and 7a show a front view of the barrier. Figure 7 shows the barrier in use in a pipe;
Figure 8 illustrates the barrier, in use, in a downstream installation;
Figure 8a shows a top view of the barrier illustrated in figure 8;
Figure 9 illustrated the barrier, in use, in an upstream installation;
Figure 9a shows a top view of the barrier illustrated in figure 9;
Figures 10 and 11 illustrate a barrier, in use, in an inclined pipe in an upstream installation and a downstream installation, respectively;
Figure 12 illustrates a barrier, in use, on a pipe having an end cut to an angle;
Figure 12a, illustrates a side view of the barrier, highlighting a stop means of the barrier;
Figure 13 is a perspective view of an elongated pole which can be used with an attachment for handling and installing the barrier as shown in the previous drawings;
Figure 14 is a perspective view of the attachment, including a receiver for the pole shown in Figure 13;
Figure 15 is a side view showing the attachment connected to the barrier; and
Figure 16 is a plan view of the attachment as pressed or cut from a sheet of steel prior to being folded and formed into a completed attachment.

Referring to the drawings, there is shown an apparatus, generally indicated by reference numeral 1, for preventing the movement of rats 90 in a pipe 80. The apparatus has a barrier 2 having a curved frame 10 for engaging with the inner surface of a pipe 80, wherein the frame has a top portion 10a and two mutually opposing side portions 10b, 10c extending from the top portion. The frame 10 also has a main surface 11 that extends around the top portion 10 and both side portions 10b, 10c. The barrier also has a flap 12 connected to the frame 10 via a pivot 14, wherein, in use, the flap 12 hangs substantially vertically and is rotatable about the pivot 14 in a downstream direction to allow the passage of waste past the apparatus, in use. In the embodiment shown, the pivot 14 is a threaded hinge pin but the skilled person will understand that any other suitable pivot may be used. Barrier 2 further has a stop means 12a for preventing rotation of flap 12, beyond the substantially vertical position, in an upstream direction, to prevent rats 90 from moving past the apparatus in an upstream direction. Thereby, the apparatus prevents rats 90 or other vermin from bypassing barrier 2 and moving further upstream towards a building.

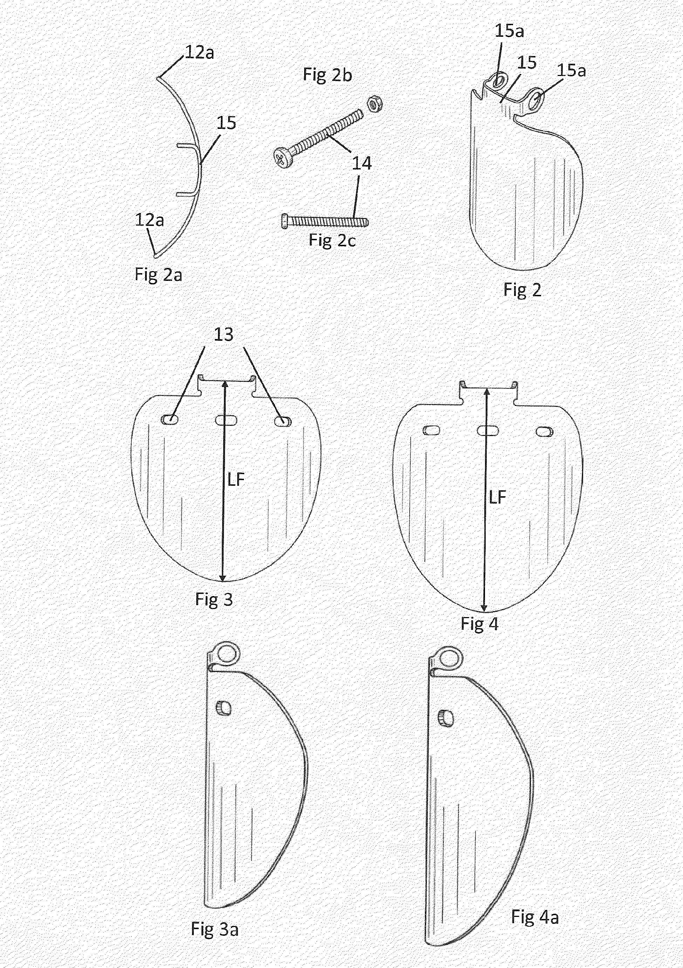

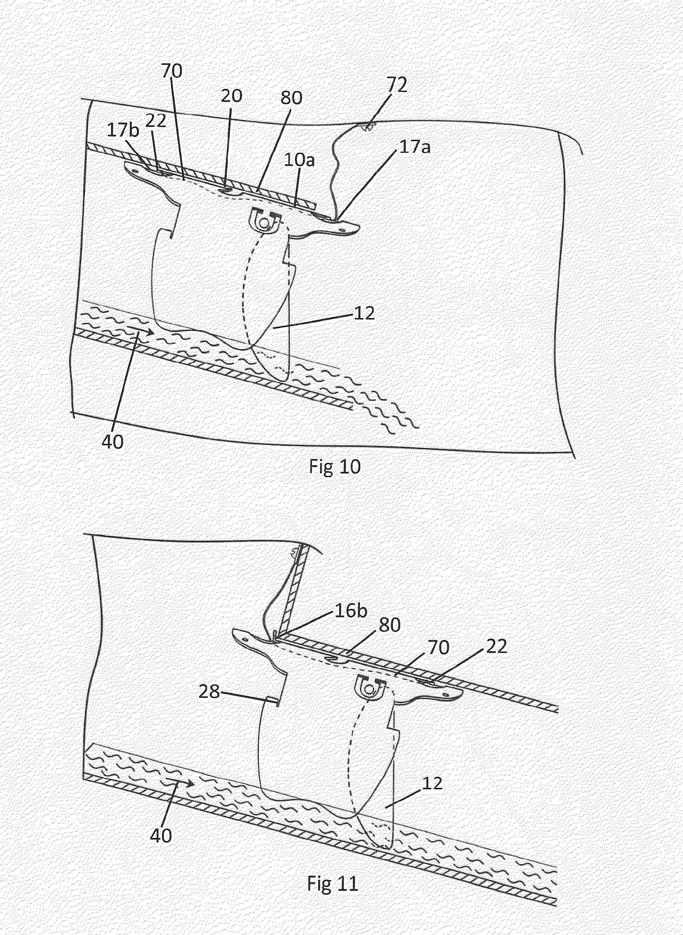

Barrier 2 is configured to prevent the movement of rats past the barrier in an upstream direction in inclined pipes, as illustrated in figures 10 and 11. The barrier is suitable for use in pipes that are inclined at an angle up to or beyond 10°, beyond 20° and beyond 30°. The barrier is suitable for use in pipes inclined at an angle up to 40° because the length (LF) of the flap is between approximately 80% to 90% of the of the barrier. By length of the barrier, we mean from the top portion 10a of the frame to the lowermost edge 12c of the flap. Thereby, in use, the apparatus effectively blocks the travel of rats in an upstream direction in inclined pipes. In the embodiment shown in figure 3, the length of the flap is less than that of figure 4. The flap illustrated in figure 3 is ideally used for barriers on horizontal pipes or pipes inclined at an angle up to 10°. The flap illustrated in figure 4 is approximately 10 mm longer than the flap of figure 3. This lowers the centre of gravity of the flap. This enables the flap of figure 4 to be used on barriers in pipes inclined at an angle up to 40°. For example, where the pipe is approximately 102 mm (4 inches), the length (LF) of the flap illustrated in figure 3 is approximately 87 mm and the length (LF) of the flap of figure 4 is approximately 97 mm. The skilled person will understand that relative changes to the dimensions of the barrier and flap are implemented where the pipe size is larger or smaller. For example, the dimensions of the barrier can be changed to enable use of the barrier in a 152 mm (6 inch) pipe, 229 mm (9 inch) pipe or a 305 mm (12 inch) pipe and so on.

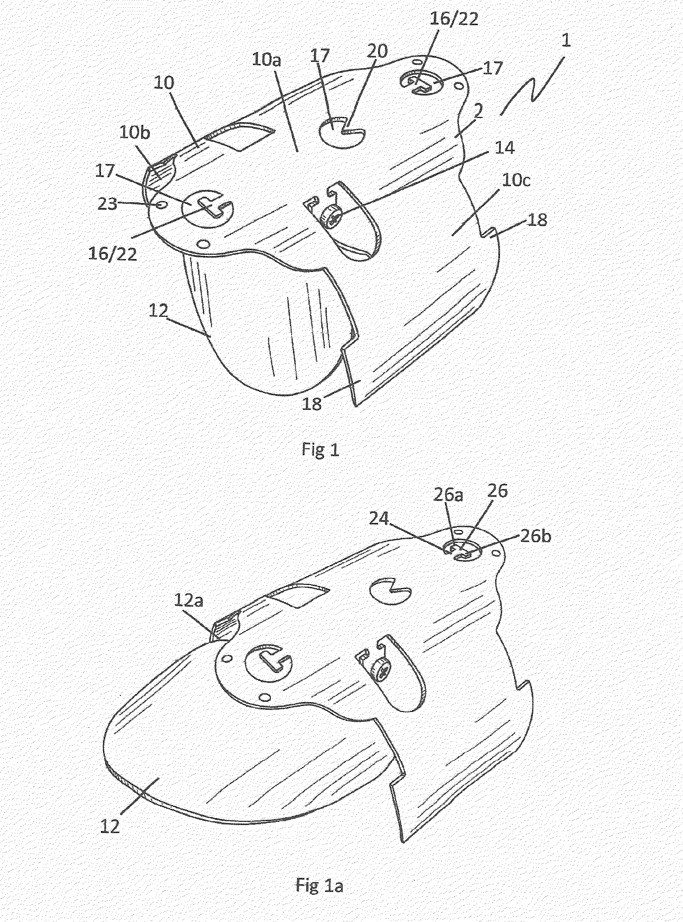

Flap 12 is shaped to prevent rotation of the flap 12, beyond the substantially vertical position, in an upstream direction. As shown in the drawings, the flap is shaped to abut against the side portions of the curved frame 10 to prevent rotation of the flap 12, beyond the substantially vertical position, in an upstream direction. The flap 12 is convex shaped to enable the flap 12 to sit flush with the frame when the flap is open to allow the maximum amount of waste to pass the barrier in the downstream direction, as illustrated in Figure 1a. Flap 12 comprises a pivot-engaging portion 15 for engaging with pivot 14. The pivot engaging portion 15 has one or more apertures, in particular, two apertures 15a for receiving pivot 14. Frame 10 also has a pivot engaging portion 19 having apertures 19a for receiving pivot 14.

Barrier 2 has a plurality of stop arrangements 16, 18, and 20 for preventing the over-insertion of the barrier into the pipe during installation and/or movement of the barrier within the pipe 80. This prevents movement of the barrier 2, in a downstream direction (indicated by arrows 40, due to force being applied from waste and/or water. Thereby, this prevents barrier 2 from becoming dislodged from pipe 80 or moved so far down the pipe that rats are able to bypass the barrier.

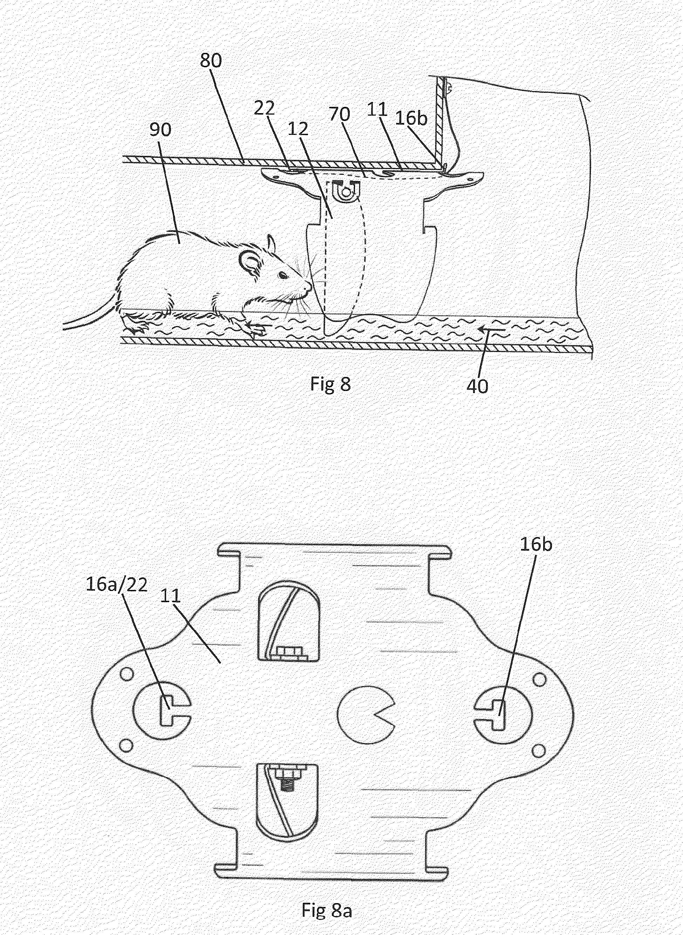

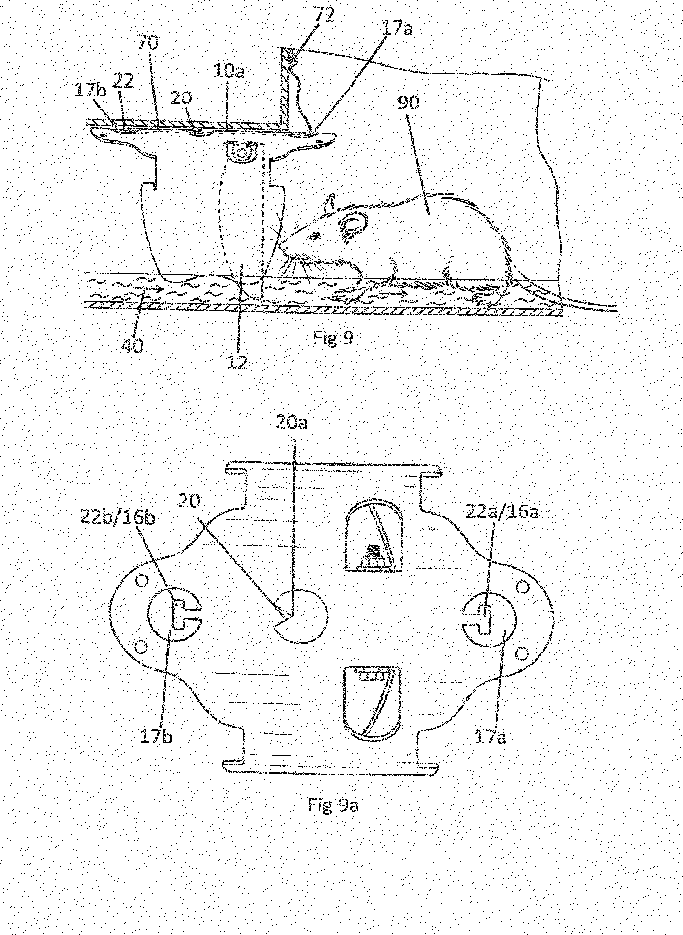

The barrier is capable of being installed at either end of a pipe. As illustrated in Figures 8 and 11, barrier 2 may be installed at the beginning of a pipe. This is referred to as a downstream installation because the barrier is inserted into the pipe 80 in a downstream direction 40. As illustrated in Figures 9 and 10, barrier 2 is capable of being installed at the end of a pipe 80. This is referred to as an upstream installation because the barrier is inserted into the pipe in an upstream direction i.e., opposing the direction of arrows 40.

Barrier 2 has a pipe end stop arrangement 16 for abutting against a pipe end, in use. As illustrated in the drawings, barrier 2 has a pipe end stop arrangement 16a located at a leading end 2a of the barrier and a pipe end stop arrangement 16b located at a trailing end 2b of barrier 2. The pipe end stop arrangement 16 is formed from a protruding portion 5 extending from the main surface 11 of frame 10. As illustrated in Figure 1, the pipe end stop arrangement 16 extends co-planar to the main surface 11 of the frame. However, the pipe end stop arrangement 16 comprises a bendable portion of the frame so that it can be bent to abut against a pipe end when in use, as illustrated in Figures 8 and 11. In particular, the protruding portion 5 extends co-planarwith the main surface 11 and is capable of being bent away from the main surface 11 of frame 10, to extend from the main surface 11 at an angle, preferably perpendicularly as illustrated in Figures 8 and 11. The pipe end stop arrangement 16 is for particular use in a downstream installation to abut against the pipe end thereby preventing downstream movement of the barrier within the pipe due to the force of waste and/or water against barrier 2. However, the skilled person will also understand that the pipe end stop arrangement 16a located at the leading end 2a of the barrier may also be used to prevent upstream movement of barrier 2. The frame 10 of the barrier has openings or apertures 17 located at the top portion 10a of the frame 10, into which the pipe end stop arrangement 16 and/or pipe wall stop means 20 protrudes. The pipe end stop arrangement 16 is located on the top portion 10a of the frame 10. However, the pipe end top arrangement may be located on one or both side portions 10b, 10c or any other portion of frame 10. The pipe end stop arrangement 16a and 16b is T-shaped but can be any suitable shape. As shown in the drawings, the pipe end stop arrangement 16 can also be used as a wire securing arrangement instead of a pipe end stop arrangement.

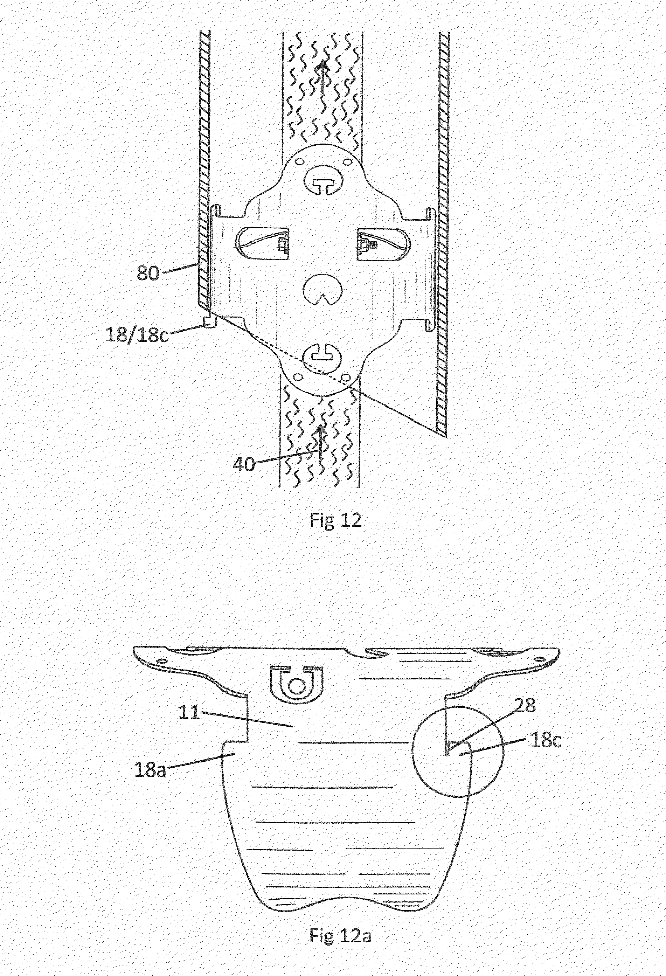

Barrier 2 also has an angled pipe end stop arrangement 18 for abutting against the end of a pipe that is cut at an angle, as illustrated in Figure 12. The angled pipe end stop arrangement 18 extends from the main surface 11 of the frame 10 on one or both side portions 10b, 10c. This enables the angled pipe end stop arrangement 18 to abut against a side portion of a pipe end that is cut to an angle. There is angled pipe end stop arrangement on the leading end and trailing end of each side portion 10b, 10c. Angled pipe end stop arrangement 18/18a-18d extends outwardly from the main surface 11 of the frame 10 on one or both side portions 10b, 10c, at an angle, preferably extending perpendicular from the main surface 11 of the frame 10, to abut against a portion of the pipe end, in use. In particular, the barrier 2 has a plurality of angled pipe end stop arrangements 18a, 18b, 18c and 18d. The frame has an incision 28 at one or more of the angled pipe end stop arrangements to aid bending of the angled pipe end stop arrangements.

Barrier 2 has a pipe wall stop arrangement 20 for abutting against the internal surface of a pipe to prevent movement of the barrier 2 within the pipe. As illustrated in Figures 9 and 10, the pipe wall stop arrangement 20 has a pointed tip 20a for abutting against the internal surface of a pipe 80a, in use, to prevent movement of the barrier within the pipe in the direction of the pointed tip. The pointed tip 20a of the pipe wall stop arrangement 20 points towards the leading end 2a of the barrier 2 and/or in a downstream direction, in use. Thereby, the pointed tip 20a opposes the movement of the barrier 2 in a downstream direction, in use. This prevents the barrier 2 from being dislodged or forced in a downstream direction by waste and/or water travelling past the barrier. The pipe wall stop arrangement 20 is particularly useful when barrier 2 is installed at the end of pipe or where an upstream installation has been used. When bent away from the main surface 11 and an upstream installation is occurring, the pipe wall stop arrangement will not hinder the barrier 2 from being pushed upstream during the installation but the pointed tip will prevent the unintentional movement of the barrier 2 in a downstream direction due to the force of waste, water and/or a powerful draught. In the illustrations provided, the pipe wall stop arrangement is V-shaped. However, the skilled person will understand that any suitable shape may be used.

The plurality of stop arrangements 16, 18 and/or 20 protrude outwardly from the main surface 11 of the frame 10 at an angle to abut against a portion of the pipe, in use. Barrier 2 has one or more wire-securing arrangements 22 around which a removal wire 70 can be looped or tied for securing the removal wire 70 to barrier 2 without the use of mechanical fixings. The wire securing arrangement 22 is shaped to prevent disengagement of the wire. The wire securing arrangement has a first member 24 around which a wire can be lopped or tied and a second member 26 for preventing disengagement of the wire from the wire securing means. The first member extends 24 from the main surface 11 of frame 10 and the second member 26 has two branches 26a, and 26b extending from the first member in opposite directions. The second member 26 prevents wire 70 from slipping off the first member 24. In particular, the second member 26 abuts against the loop or tied portion of the wire 70, in use, to prevent slippage of the wire 70 off of the first member 24. As previously discussed, the wire securing arrangement 22 may also perform the function of the pipe stop arrangement 16. Barrier 2 has a first wire securing arrangement 22a/16a located on the leading end 2a of the barrier and a second wire securing arrangement 22b/16b located on the trailing end 2b of barrier 2. The wire 70 can be effectively secured regardless of whether the installation of the barrier is upstream or downstream. In use, the wire 70 by passes the wire securing arrangement that will be located on the end 2a or 2b of barrier 2 closest to the pipe end, when the barrier is installed, and extends beneath the top portion 10a of barrier 2 to the wire securing arrangement located on the other end of the pipe and is secured around that wire securing arrangement 22. For example, referring to Figure 9 and with reference to Figure 9a also, wire 70 is secured at 72 on the manhole cover frame or to a portion of the manhole wall or elsewhere external to the pipe for enabling the wire to be pulled to remove barrier 2 from the pipe. The removal wire is received through aperture 17a located on leading end 2a of barrier 2, the wire extends beneath the top portion 10a of frame 11 and is received through aperture 17b on trailing end 2b of barrier 2. The wire 70 is looped or tied around wire securing arrangement 22b which extends into aperture 17b. As illustrated, wire securing means 22 is T-shaped but may be any shape suitable for maintaining the wire on the barrier.

Frame 10 of barrier 2 has one or more protruding portions 5a-5g forming the plurality of stop means 18-20 and the wire securing means 22. The protruding portions 5a-5g extend away from the main surface 11 of the frame 10, at an angle, in use. This enables the protruding portions 5a-5g to abut against a portion of the pipe, in use, to prevent movement of the barrier. In a preferred embodiment, the protruding portions 5a-5g extend coplanar to the main surface 11 of the frame 10 and are bendable to extend away from the main surface 11 at an angle. This enables the appropriate protruding portions 5a-5g to be deployed when required. Thereby, this prevents the protruding portions 5a-5g from hindering the installation of the barrier 2. Further, this reduces the size and bulkiness of the barrier 2 for storage and transportation. This is in comparison to devices having the protruding portions 5a-5g deployed or extending away from the main surface 11 of the frame at an angle, at all times.

Flap 12 of barrier 2 has one or more openings 13 for allowing the passage of air or a draught to prevent the air or draught from forcing the flap 12 to open. This prevents the force of a draught from opening the flap 12 i.e., causing the flap 12 to rotate in a downstream direction which may enable rats to bypass the barrier 2 and move further upstream.

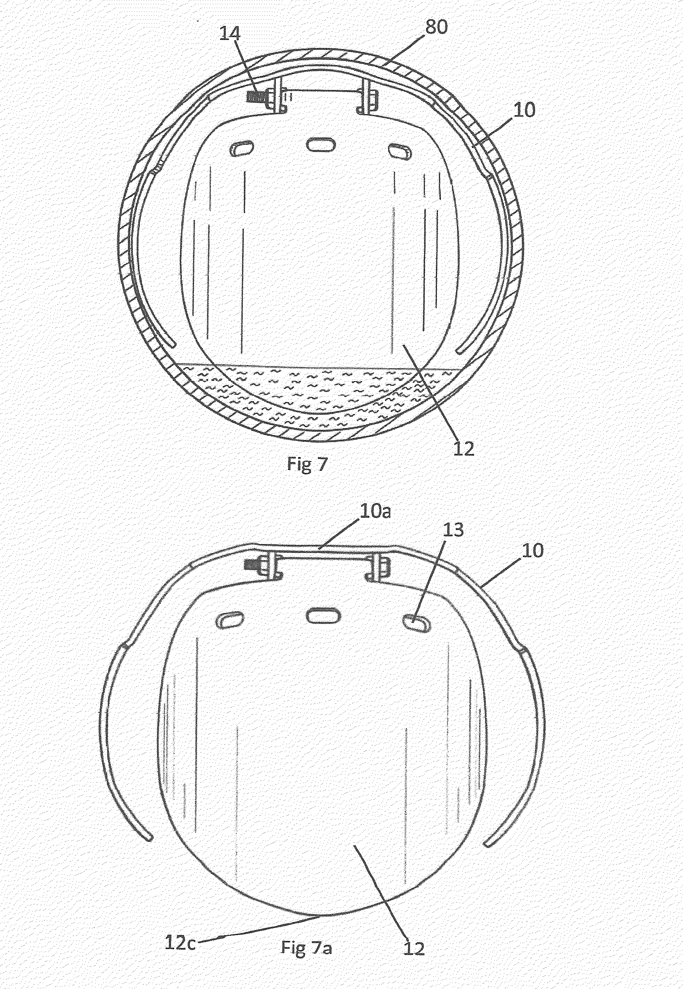

As illustrated in Figure 7, the barrier 2 maintains secure engagement with a pipe 80 via friction fit or via the natural spring action of the frame 10 causing it to press against the internal wall of the pipe 80. In particular, side portions 10b and 10c press against the internal wall of pipe 80 to fix the barrier in place.

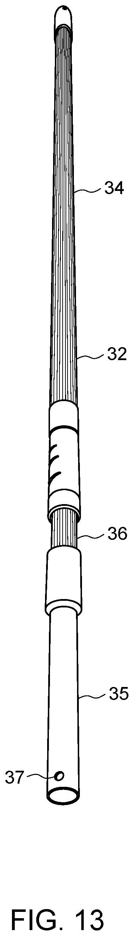

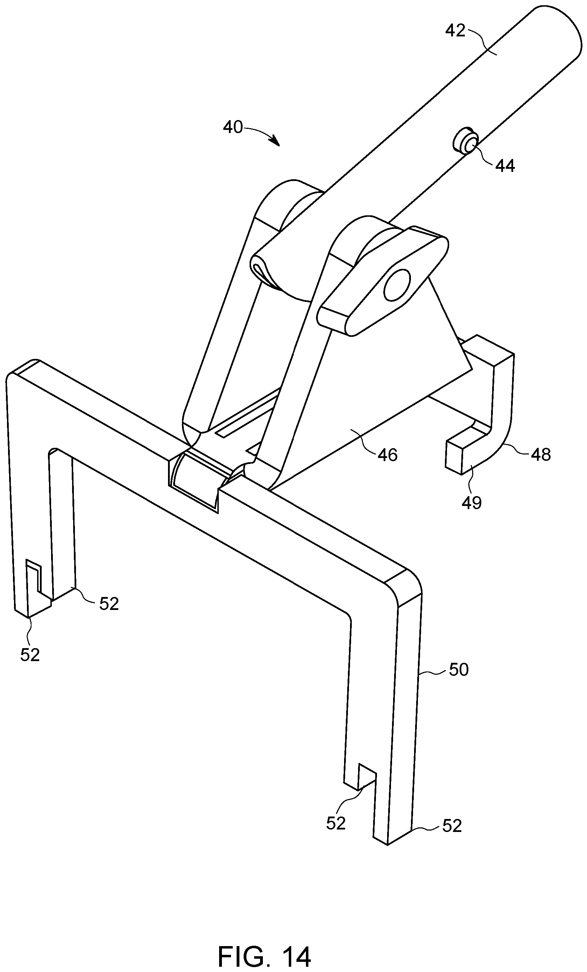

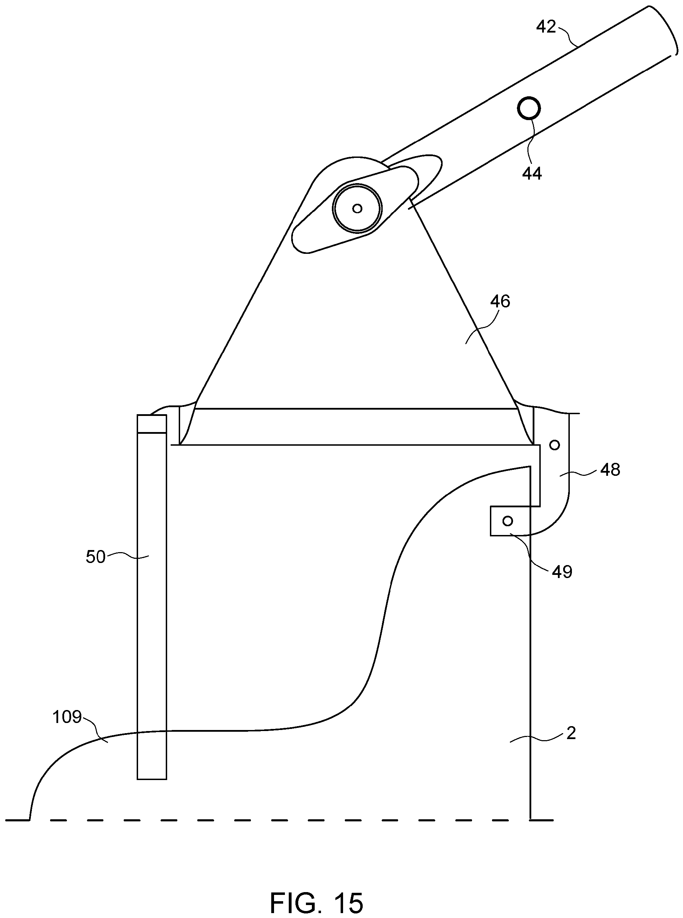

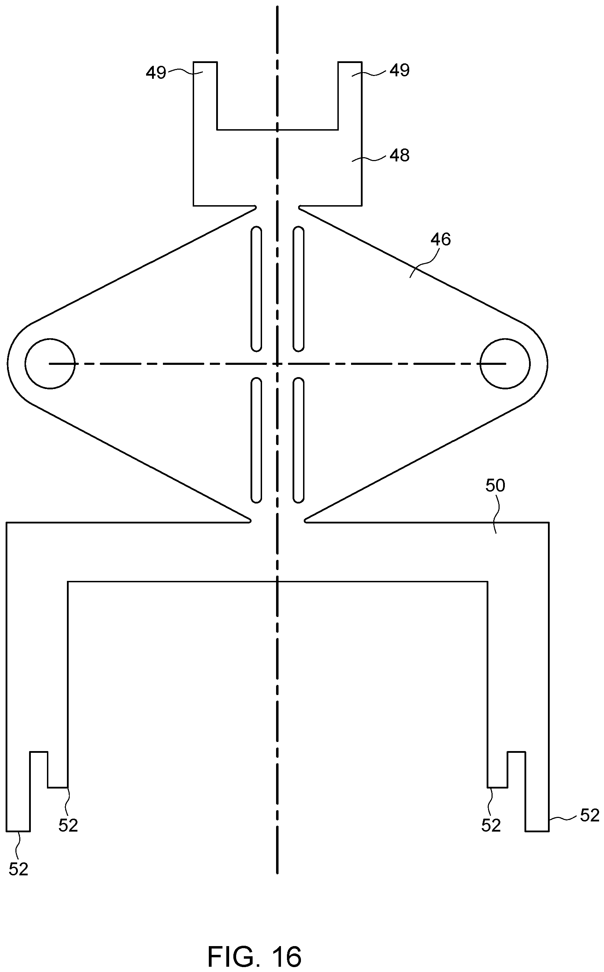

Referring to Figures 13 to 16 these show an installation device 30 for installing the barrier 2 in a pipe located below ground level. The installation device 30 includes an elongate detachable handle 32 and an attachment 40 which is removably engageable with the barrier 2.

The handle 32 has a main section 34 and a telescopic section 36 so that the handle can be extended or shortened as required. The end 35 of the handle 32 is provided with two orifices 37 for engaging with the attachment 40.

The attachment 40 includes a short pipe 42 having two spring loaded pins 44 which are removably engageable with the orifices 37 on the handle 32. The pipe 42 is pivotally mounted between a pair of support plates 46. At a first end of the support plate 46 is a forked engager 48, the forked ends 49 of which engages with holes 23 at one or other end of the barrier 2. At a second end of the support plates 46 is a bifurcated grip 50 with two fingers 52 at each side of the grip 50 which grip and retains the side portion 10b and 10c of the frame 10 in a slight compression, so that it more easily fits into a pipe. When the barrier 2 is correctly installed in the pipe, the installation device 30 is manipulated back and forth and sideways by a user until device 30 disengages from the installed barrier 2.

It is to be understood that the invention is not limited to the specific details described herein which are given by way of example only and that various modifications and alterations are possible without departing from the scope thereof as defined in the appended claims.

## Claims

1. An apparatus for preventing the movement of rats in a pipe, the apparatus comprising a barrier having:
- a curved frame for engaging with the inner surface of a pipe, wherein the frame comprises a top portion and two mutually opposing side portions extending from the top portion;
- a flap connected to the frame via a pivot, wherein, in use, the flap hangs substantially vertically, even when the pipe is at an inclined angle to the horizontal, and the flap is rotatable about the pivot in a downstream direction to allow the passage of waste past the apparatus;
- wherein the flap includes a stop means for preventing rotation of the flap, beyond the substantially vertical position, in an upstream direction, to prevent rats from moving past the apparatus in an upstream direction.

2. An apparatus according to claim 1, wherein the length of the flap is between 80% to 90% of the length of the barrier; optionally an apparatus according to claim 1, wherein the length of the flap is between 85% to 90% of the length of the barrier; and optionally an apparatus according to claim 1, wherein the length of the flap is 90% or more of the length of the barrier.

3. An apparatus according to any preceding claim, wherein the barrier comprises a plurality of stop means for preventing over-insertion of the apparatus into the pipe during installation and/or movement of the barrier within the pipe, after installation.

4. An apparatus according to any preceding claim, wherein the barrier comprises a pipe end stop means for abutting against a pipe end, in use.

5. An apparatus according to any preceding claim, wherein the barrier comprises an angled pipe end stop means for abutting against the end of a pipe that is cut at an angle.

6. An apparatus according to any preceding claim, wherein the barrier comprises a pipe wall stop means for abutting against the internal surface of a pipe to prevent movement of the barrier within the pipe; optionally
wherein the pipe wall stop means comprises a pointed tip for abutting against the internal surface of a pipe, in use, to prevent movement of the barrier within the pipe in the direction of the pointed tip.
and optionally wherein the plurality of stop means, pipe end stop means, angled pipe end stop means and/or pipe wall stop means protrudes outwardly from the main surface of the frame at an angle to abut against a portion of the pipe, in use.

7. An apparatus according to any preceding claim, wherein the barrier comprises one or more wire-securing means around which a wire can be looped or tied for securing a removal wire to the barrier without the use of mechanical fixings, the wire securing means being shaped to prevent disengagement of the wire.

8. An apparatus according to claim 7, wherein the wire securing means comprises a first member around which a wire can be lopped or tied and a second member for preventing disengagement of the wire from the wire securing means, wherein the first member extends from the main surface of the frame and the second member comprises two branches extending from the first member in opposite directions.

9. An apparatus according to claim 7 or 8, wherein the wire securing means is T-shaped.

10. An apparatus according to any one of claims 3 to 9, wherein the frame of the barrier comprises one or more protruding portions forming one or more of the plurality of stop means, pipe end stop means, angled pipe end stop means and/or pipe wall stop means.

11. An apparatus according to claim 10, wherein, the one or more protruding portions extend away from the main surface of the frame, at an angle, in use, and optionally wherein the one or more protruding portions extend coplanar to the main surface of the frame and are bendable to extend away from the main frame at an angle to form one or more of the stop means.

12. An apparatus according to claims 10 or 11 when dependent on any one of claims 9 to 11, wherein one or more of the protruding portions are, alternatively or additionally, suitable for forming the wire securing means.

13. An apparatus according to any preceding claim, wherein the flap of the barrier comprises one or more openings for allowing the passage of air or a draught to prevent the air or draught from forcing the flap to open.

14. An apparatus according to any preceding claims including an installation device for installing the barrier in a pipe located below ground level, the device including an elongated handle and an attachment which is removably engageable with the barrier so that the barrier can be manipulated into position in the pope with the installation device.

15. An apparatus according to Claim 14 in which the attachment includes a forked engager at one end for removably engaging a pair of locating holes on the barrier and a bifurcated grip at a second end with fingers for removably engageable with side portions of the frame to compress the frame for easy insertion into the pipe.
